# EUROPEAN PATENT SPECIFICATION

(11) **EP 1 739 879 B1**
(45) Date of publication and mention of the grant of the patent: **02.05.2007**
(21) Application number: 05105773.5
(22) Date of filing: 28.06.2005
(51) Int. Cl.: H04L 12/28, H04Q 7/38

(54) **Probabilistic location prediction for a mobile station**
Probabilistische Vorhersage des Aufenthaltsortes für eine Mobilstation
Prédiction probabilistique de la localisation pour une station mobile

(43) Date of publication of application: 03.01.2007
(73) Proprietor: Research In Motion Limited, Waterloo, Ontario N2L 3W8 (CA)
(72) Inventor: Robertson, Ian, Waterloo Ontario N2J 1H4 (CA); Nagy, Tom, Waterloo Ontario N2L 2N4 (CA)
(74) Representative: Rickard, David John

(56) References cited:
- EP-A- 1 302 783
- US-A1- 2003 065 712
- US-A1- 2003 224 799
- US-A1- 2004 166 864

## Description

The invention generally relates to wireless networks. In particular, embodiments of the invention relate to probabilistic prediction of a location of a wireless-enabled mobile station.

Wireless networks, specifically those based on the Institute of Electrical and Electronic Engineers (IEEE) 802.11 standard, are experiencing rapid growth. Some users, for example laptop users, use the network while stationary (or associated with a single access point (AP)), and before moving, the user ceases operation only to continue using the network after moving to a new location. This is known as "discrete mobility" and "nomadic roaming". Other users, for example voice-based application users, use the network while moving. This is known as "continuous mobility" and "seamless roaming".

Currently, the handoff procedure as a mobile station roams from one AP to another entails too much latency to support voice and multimedia applications. This handoff procedure results in a transfer of physical layer connectivity and state information from one AP to another with respect to the mobile station. Moreover, APs have limited resources, and it is possible that as a mobile station enters the coverage area of an AP, that AP does not have the resources to support the mobile station.

[0003a] US2003/0224799 discloses a method of calculating a single, deterministic predicted track for a mobile device through a straight-line extrapolation of the current direction of travel and speed of the mobile device. A services system utilizes the predicted track to determine which coverage areas of access points the mobile device is likely to pass through and to reserve in advance utilization rights and bandwidth in said coverage areas prior to the start of data transfer by the mobile device.

[0003b] US2003/0065712 discloses a method of predicting a future location of a client device by using previous position information, the client's rate and direction of travel. A projected position at a future time for the client device can be estimated from this information.

### GENERAL

According to the present invention, a prediction may be made of the location of a wireless-enabled mobile station in a wireless local area network. The method of performing the prediction according to claim 1 comprises generating a probabilistic prediction of said location by: calculating a vector representing movement of the mobile station through a space in which two or more access points of the network are located; and determining a region surrounding the vector in which the mobile station has at least a given probability to be located within a certain period of time. The invention further provides a corresponding wireless system, server, computer program product and wireless communications network according to respective independent claims 9 to 15.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

Figure 1 is an illustration of an exemplary deployment of a wireless local area network (LAN) in a building, according to an embodiment of the invention. The LAN includes access points (APs) and a switched, routed fabric including a server;

Figure 2 is a flowchart of a method implemented at least in part by the server of Figure 1, according to an embodiment of the invention;

Figure 3 is a block diagram of an exemplary server, according to some embodiments of the invention; and

Figure 4 is a block diagram of an exemplary mobile station, according to some embodiments of the invention.

It will be appreciated that for simplicity and clarity of illustration, elements shown in the figures have not necessarily been drawn to scale. For example, the dimensions of some of the elements may be exaggerated relative to other elements for clarity.

### DESCRIPTION OF PREFERRED EMBODIMENTS

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, and components have not been described in detail so as not to obscure the embodiments of the invention.

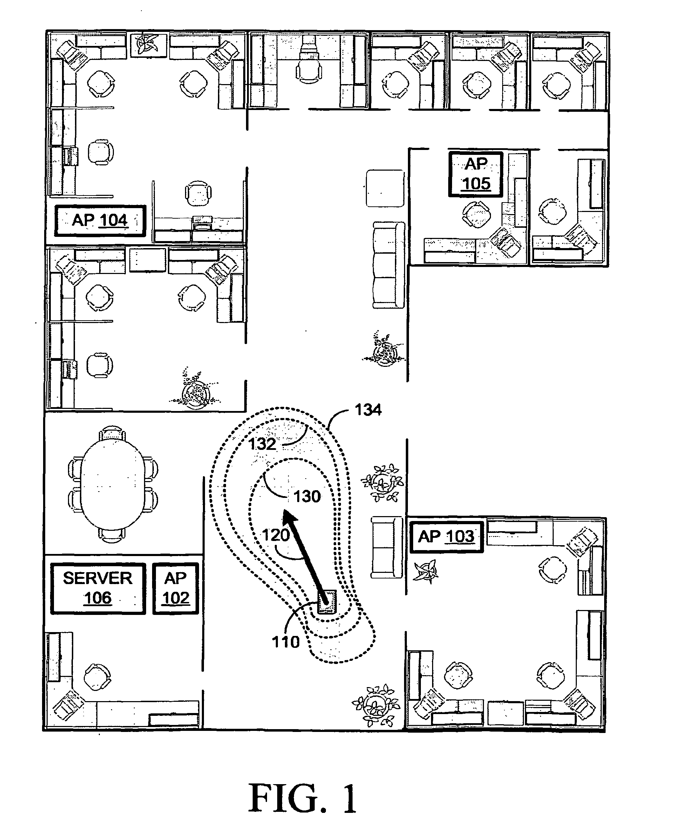

Figure 1 is an illustration of an exemplary deployment of a wireless local area network (LAN) in a building, according to an embodiment of the invention. The WLAN includes APs 102, 103, 104 and 105 and a switched, routed fabric including a server 106.

A mobile station 110 may be active in the WLAN. A non-exhaustive list of examples for mobile station 110 includes a wireless-enabled laptop, a wireless-enabled cellphone, a wireless-enabled personal digital assistant (PDA), a wireless-enabled video camera, a wireless-enabled gaming console, a wireless Internet-Protocol (IP) phone and any other suitable wireless-enabled mobile station.

In the example of Figure 1, APs 102, 103, 104 and 105, server 106 and mobile station 110 are "802.11-enabled", which means that wireless communications in the WLAN via the respective WLAN controllers of the wireless devices are in accordance with one or more of the following standards defined by the Institute of Electrical and Electronic Engineers (IEEE) for Wireless LAN MAC and Physical layer (PHY) specifications. However, it will be obvious to those of ordinary skill in the art how to modify the following for other existing WLAN standards or future related standards, including 802.11i, 802.11n and 802.11r.

| Standard | Published | Maximum Speed | Frequency | Modulation |
|---|---|---|---|---|
| 802.11 | 1997 | 2 Mbps | 2.4 GHz | Phase-Shift |
| 802.11a | 1999 | 54 Mbps | 5.0 GHz | Orthogonal Frequency Division Multiplexing |
| 802.11b | 1999 | 11 Mbps | 2.4 GHz | Complementary Code Keying |
| 802.11g | 2003 | 54 Mbps | 2.4 GHz | Orthogonal Frequency Division Multiplexing |

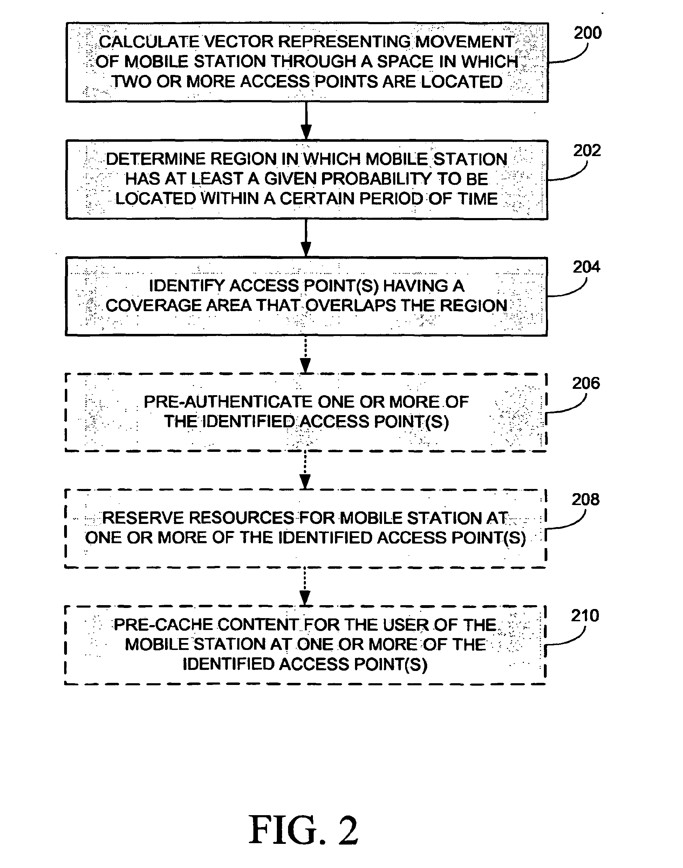

Figure 2 is a flowchart of a method implemented, at least partially, by server 106, according to an embodiment of the invention.

A vector representing motion of mobile station 110 is calculated (200). The vector may be calculated by server 106, or by mobile station 110 and then transmitted wirelessly via the WLAN to server 106 for further processing.

An exemplary vector 120 is shown in Figure 1, based at the current position of mobile station 110, having a direction representing the direction of motion of mobile station 110 and a length representing the speed of motion of mobile station 110. The vector may be calculated on the basis of any one or any combination of instantaneous, projected and historic information. The information may be specific to mobile station 110 or to a group or class of users to which mobile station 110 belongs, or may be global information applicable to all mobile stations. The historic information may be incorporated using a forgetting factor so that more recent information has more of an effect than less recent information.

For example, mobile station 110 may transmit signal strength measurements to server 106 as it moves through the building, and server 106 may use these measurements, the fixed locations of APs 102, 103, 104 and 105, and the layout of the building to calculate the vector. In this example, the signal strength measurements are specific to mobile station 110, and the fixed locations of the access points in the network and the layout of the building are global information applicable to all mobile stations.

In another example, mobile station 110 may transmit global positioning system (GPS) information to server 106, and server 106 may use this information to calculate the vector. In this example, the GPS information is specific to mobile station 110 and may include instantaneous and/or historical information.

In another example, server 106 may use handoff information regarding mobile station 110 and/or regarding mobile stations belonging to a class or group of users to which mobile station 110 also belongs. For example, if mobile station 110 belongs to a user in a group of users that generally roam in a certain pattern in the building, for example, users that share an office, then that certain roaming pattern may be used to calculate the vector. Moreover, if mobile station 110 belongs to a user in a particular class of users, for example, managers, that frequently roam to certain locations in the building, for example, the meeting room, then that information may be used to calculate the vector. In a further example, women who work in one building and then roam to another building tend to visit the meeting rooms and women's washrooms of the other building and never visit the men's washrooms of the other building. In yet another example, maintenance and facilities staff access areas of buildings (for example, heating, ventilation and air conditioning areas, wiring rooms) that other staff members do not.

Server 106 then determines a region in which mobile station 110 is likely to be located with at least a given probability within a certain period of time (202). Three exemplary regions 130, 132 and 134 are shown in Figure 1. Regions 130 and 132 are for the same period of time, but the probability that mobile station 110 is located in region 130 is higher than the probability that mobile station 110 is located in region 132. Regions 132 and 134 are for the same probability, but region 134 is for a longer period of time than region 132.

Although vector 120 and regions 130, 132 and 134 are illustrated as planar in Figure 1, embodiments of this invention may be generalized to three dimensions when appropriate, for example, buildings with multiple floors.

Similarly, although this description relates to a single vector and a region around the vector, persons of ordinary skill in the art can modify embodiments of this invention to apply to a sequence of vectors or a curved path approximated thereby.

Server 106 may take various factors into account when determining the region. A non-exhaustive list of examples for such factors includes:
1. Global Factors
   a) a user of a mobile station tends to move in a straight line;
   b) it is unlikely that a user will reverse direction;
   c) the physical structure of a building will affect the route of a user of a mobile station (for example, the placement of walls, stairs, doors, elevators and the like).
2. Class/Group Factors
   a) visitors to the building tend to visit certain areas;
   b) users with preferred access to resources may be allotted larger regions than normal users;
   c) the history of routes of other users in the same class or group;
3. Individual Factors
   a) the individual history of the user;
   b) the user is sedentary, or the user moves around a lot;
   c) if the user is in a wheelchair, exclude routes involving stairs, increase the likelihood of visiting wheelchair-accessible washrooms, and decrease the likelihood of entering non-wheelchair-accessible rooms.

The historic information may be incorporated using a forgetting factor so that more recent information has more of an effect than less recent information.

For example, if mobile station 110 is stationary, and no other factors are taken into account, the vector is a point and the region may be a circle around mobile station 110. As mobile station 110 moves, this circle may be deformed in the direction of motion. The faster mobile station 110 moves in a particular direction, the longer the vector representing the motion of mobile station 110, and the more deformed the region is from a circle and the more area covered by the region.

Once server 106 has determined the region in which mobile station 110 has at least a given probability to be located within a certain period of time, server 106 may identify which, if any, of APs 102, 103, 104 and 105 have a coverage area that overlaps, even partially, the determined region (204). For example, the coverage areas of APs 102 and 103 may overlap regions 130, 132 and 134, while the coverage area of AP 104 may overlap regions 132 and 134 only, and the coverage area of AP 105 may not overlap any of regions 130, 132 and 134.

The coverage areas of the APs may have been calculated or measured. For example, server 106 may calculate the coverage area of an access point based on its location, make, model and some characteristic data for such an access point. In another example, server 106 may dynamically calculate the coverage area of an access point from collected data of when, where and at what received signal strength indication (RSSI) mobile stations roam.

A non-exhaustive list of examples for actions that server 106 may take upon identifying the access points includes:
a) Initiating pre-authentication processes with one or more of the identified APs (206), by signaling either mobile station 110 or the AP to begin and with which communications partner. For example, pre-authentication may be performed at the Data Link layer ("layer 2") of the WLAN, or at the Data Link layer ("layer 2") and the Network layer ("layer 3") of the WLAN, according to the Open Systems Interconnection (OSI) communication model. If regions of different given probabilities are determined, pre-authentication at "layer 2" and "layer 3" may be done for APs that are accessible by mobile station 110 from within the region of higher probability and pre-authentication at "layer 2" may be done for APs that are accessible by mobile station 110 only from within the region of lower probability. Pre-authentication may accelerate the handoff procedure as mobile station roams from one AP to another.
b) Reserving resources for mobile station 110 at one or more of the identified APs (208). For example, if mobile station 110 has a probability of 60% of roaming to a particular AP within 1 minute, bandwidth may be reserved for mobile station at the particular AP. However, if a different mobile station has a probability of 90% of roaming to the particular AP, the resource needs of the different mobile station may trump the needs of mobile station 110.
c) Pre-caching or routing content for the user of mobile station 110 at one or more of the identified APs (210). A non-exhaustive list of examples for this content includes targeted advertising, telephone calls, and the like.
d) Notifying voice over IP (VoIP) servers that a call endpoint might be about to roam (so that the call data could start to be multicasted to the APs in the region).
e) Initiating roaming procedures to other networks (for example, roaming from the WLAN to a cellular network).
f) Updating presence information (which in turn can be used to route phone calls, update calendar appointments, create lists of meeting attendees, notify conference call participants of the names of people in the room on the other end, and the like).

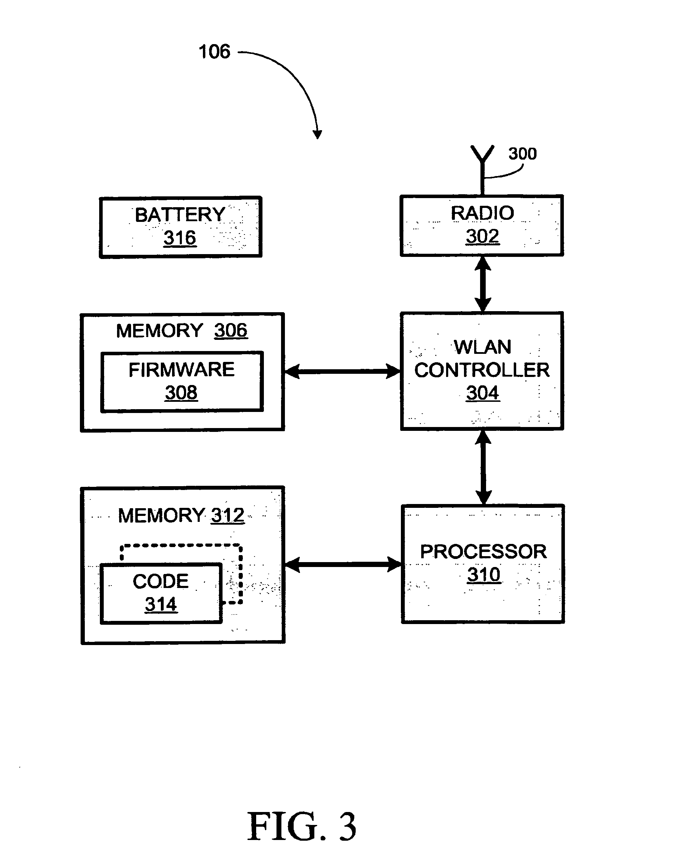

Figure 3 is a block diagram of an exemplary server, according to some embodiments of the invention. Server 106 includes at least one antenna 300 coupled to a radio 302, which in turn is coupled to a WLAN controller 304. WLAN controller 304 may be coupled to a memory 306 storing firmware 308 to be executed by WLAN controller 304. Server 106 includes a processor 310 and a memory 312 coupled to processor 310. Memory 312 may store executable code 314 to be executed by processor 310. Executable code 314, when executed by processor 310, may cause server 106 to implement all or a portion of the method of Figure 2.

Processor 310 may be coupled to WLAN controller 304 and may be able to control, at least in part, the operation of WLAN controller 304. Server 106 includes a battery 316 to provide power to radio 302, WLAN controller 304, processor 310 and memories 306 and 312. Server 106 may include other components that, for clarity, are not shown.

Radio 302, WLAN controller 304, processor 310 and memories 306 and 312 are functional blocks and may be implemented in any physical way in server 106. For example, radio 302, WLAN controller 304, processor 310 and memories 306 and 312 may be implemented in separate integrated circuits, and optionally in additional discrete components. Alternatively, some of the functional blocks may be grouped in one integrated circuit. Furthermore, the functional blocks may be parts of application specific integrated circuits (ASIC), field programmable gate arrays (FPGA) or application specific standard products (ASSP).

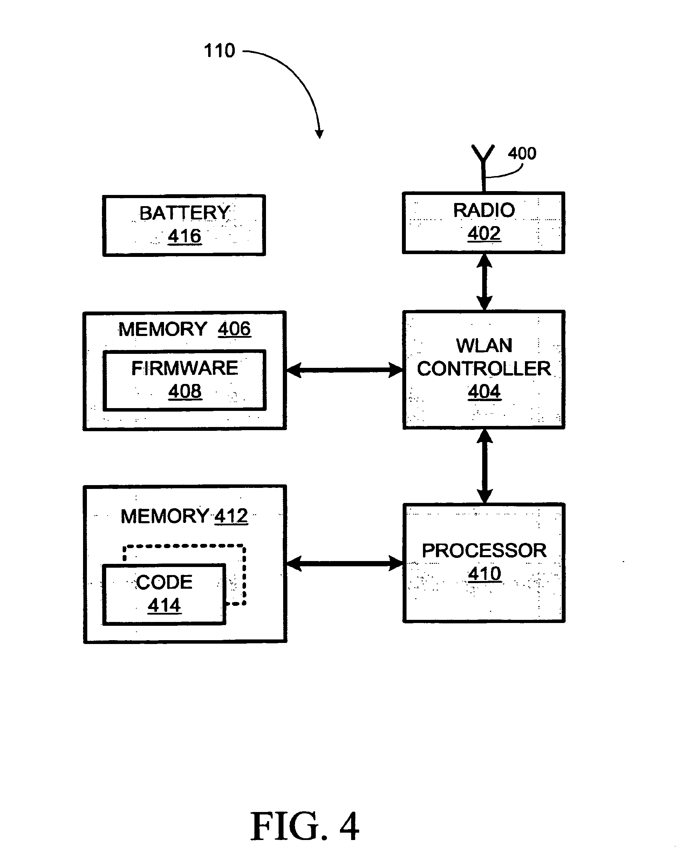

Figure 4 is a block diagram of an exemplary mobile station, according to some embodiments of the invention. Mobile station 110 includes at least one antenna 400 coupled to a radio 402, which in turn is coupled to a WLAN controller 404. WLAN controller 404 may be coupled to a memory 406 storing firmware 408 to be executed by WLAN controller 404. Mobile station 110 includes a processor 410 and a memory 412 coupled to processor 410. Memory 412 may store executable code 414 to be executed by processor 410. Executable code 414, when executed by processor 410, may cause mobile station 110 to calculate a vector representing movement of mobile station 110 through a space in which two or more APs are located, as at 200 of the method of Figure 2.

Processor 410 may be coupled to WLAN controller 404 and may be able to control, at least in part, the operation of WLAN controller 404. Mobile station 110 includes a battery 416 to provide power to radio 402, WLAN controller 404, processor 410 and memories 406 and 412. Mobile station 110 may include other components that, for clarity, are not shown.

Radio 402, WLAN controller 404, processor 410 and memories 406 and 412 are functional blocks and may be implemented in any physical way in mobile station 110. For example, radio 402, WLAN controller 404, processor 410 and memories 406 and 412 may be implemented in separate integrated circuits, and optionally in additional discrete components. Alternatively, some of the functional blocks may be grouped in one integrated circuit. Furthermore, the functional blocks may be parts of application specific integrated circuits (ASIC), field programmable gate arrays (FPGA) or application specific standard products (ASSP).

A non-exhaustive list of examples for processors 310 and 410 includes a central processing unit (CPU), a digital signal processor (DSP), a reduced instruction set computer (RISC), a complex instruction set computer (CISC) and the like.

Memories 306 and 312 may be fixed in or removable from server 106. Similarly, memories 406 and 412 may be fixed in or removable from mobile station 110. A non-exhaustive list of examples for memories 306, 312, 406 and 412 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

A non-exhaustive list of examples for antennae 300 and 400 includes a dipole antenna, a monopole antenna, a multilayer ceramic antenna, a planar inverted-F antenna, a loop antenna, a shot antenna, a dual antenna, an omnidirectional antenna and any other suitable antenna.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

### COPYRIGHT NOTICE

A portion of the disclosure of this patent document contains material which is subject to copyright protection. The copyright owner has no objection to the facsimile reproduction by anyone of the patent document or patent disclosure, as it appears in the Patent Office patent file or records, but otherwise reserves all copyright rights whatsoever.

## Claims

1. A method for prediction of a location of a wireless-enabled mobile station (110) in a wireless local area network, the method comprising:
generating a probabilistic prediction of said location by:
calculating a vector (120) representing movement of said wireless-enabled mobile station (110) through a space in which two or more access points (102, 103, 104, 105) of said network are located; and
determining a region (130, 132, 134) surrounding said vector (120) in which said mobile station (110) has at least a given probability to be located within a certain period of time.

2. The method of claim 1, further comprising:
identifying which of said access points (102, 103, 104, 105) are accessible by said mobile station (110) from within said region (130, 132, 134).

3. The method of claim 2, further comprising:
reserving resources for said mobile station (110) at one or more of said access points (130, 132, 134) that are accessible.

4. The method of claim 2 or 3, further comprising:
pre-authenticating said mobile station (110) with one or more of said access points (130, 132, 134) that are accessible.

5. The method of claim 4, wherein pre-authenticating said mobile station (110) comprises at least:
pre-authentication at the Data Link layer of said network according to the Open Systems Interconnection communication model, and/or
pre-authentication at the Data Link layer and the Network layer of said network according to the Open Systems Interconnection communication model.

6. The method of any one of claims 1 to 5, wherein calculating said vector (120) comprises:
using global positioning system data for said mobile station (110), and/or
using signal strength information regarding signals received at said mobile station (110) and using the locations of one or more access points (102, 103, 104, 105) generating said signals, and/or
using signal strength information regarding signals transmitted by said mobile station (110) and using the locations of one or more access points (102, 103, 104, 105) receiving said signals, and/or
using handoff information regarding said mobile station (110) as it moves and using the locations of one or more access points (102, 103, 104, 105), and/or
calculating said vector (120) based on any one or any combination of instantaneous, projected and historic information, and/or
calculating said vector (120) based, at least in part, on information that is specific to said mobile station (110), and/or
calculating said vector (120) based, at least in part, on information that is specific to a group or class of users to which the user of said mobile station (110) belongs, and/or
calculating said vector (120) based, at least in part, on information that is applicable to all mobile stations (100).

7. The method of any one of claims 1 to 6, wherein determining said region (130, 132, 134) comprises:
determining said region (130, 132, 134) based, at least in part, on information that is specific to said mobile station (110), and/or
determining said region (130, 132, 134) based, at least in part, on factors that are specific to a class or group of users to which the user of said mobile station (110) belong, and/or
determining said region (130, 132, 134) based, at least in part, on factors that are applicable to all mobile stations (110).

8. The method of any one of claims 1 to 7, further comprising:
determining another region (130, 132, 134) surrounding said vector (120) in which said mobile station (110) has at least a different given probability to be located within said certain period of time.

9. A wireless system for implementing a wireless local area network, the system comprising:
two or more access points (102, 103, 104, 105);
a wireless-enabled mobile station (110); and
a server (106) able to generate a probabilistic prediction of a location of said mobile station (100) by calculating a vector (120) representing movement of said mobile station (110) through a space in which said two or more access points (102, 103, 104, 105) are located and determining a region (130, 132, 134) surrounding said vector (120) in which said mobile station (110) has at least a given probability to be located within a certain period of time.

10. A wireless system for implementing a wireless local area network, the system comprising:
two or more access points (102, 103, 104, 105);
a wireless-enabled mobile station (110) able to calculate a vector (120) representing movement of said mobile station (110) through a space in which said two or more access points (102, 103, 104, 105) are located; and
a server (106) able to receive said vector (120) from said mobile station (110) in a wireless transmission over said network and able to determine a region (130, 132, 134) surrounding said vector (120) in which said mobile station (110) has at least a given probability to be located within a certain period of time.

11. The wireless system of claim 9 or claim 10, wherein said server (106) is able to identify which of said access points (102, 103, 104, 105) are accessible by said mobile station (110) from within said region and/or wherein said access points (102, 103, 104, 105), said mobile station (110) and said server (106) are compatible with IEEE Standard 802.11.

12. A server (106) comprising:
an antenna (300);
a radio (302) coupled to said antenna (300);
a wireless local area network controller (304) coupled to said radio (302) through which said server (106) is able to communicate over a wireless local area network;
a processor (310) coupled to said wireless local area network controller (304); and
memory (312) arranged to store executable code means (314) which, when executed by said processor (310), calculate a vector (120) representing movement of a wireless-enabled mobile station (110) through a space in which two or more access points (102, 103, 104, 105) of said network are located and determine a region (130, 132, 134) surrounding said vector (120) in which said mobile station (110) has at least a given probability to be located within a certain period of time.

13. The server (106) of claim 12, wherein said executable code means (314), when executed by said processor (310), identify which of said access points (102, 103, 104, 105) are accessible by said mobile station (110) from within said region (130, 132, 134) and/or wherein said wireless local area network controller (304) is compatible with IEEE Standard 802.11.

14. A computer program product for probabilistic prediction of a location of a wireless-enabled mobile station (110) in a wireless local area network, the computer program product comprising a computer readable medium embodying program code means executable by a processor of a server (106) and/or a mobile station (110) for implementing the method of any one of claims 1 to 8.

15. A wireless communications network comprising at least one mobile station (110) and a server (106) of claim 12 or claim 13.

## Patentansprüche

1. Verfahren zur Bestimmung der Position einer für die drahtlose Datenübertragung geeigneten Mobilstation (110) in einem drahtlosen lokalen Netzwerk, wobei das Verfahren umfasst:
die Erzeugung einer probabilistischen Bestimmung der Position durch:
Berechnung eines Vektors (120), welcher die Bewegung der für die drahtlose Datenübertragung geeigneten Mobilstation (110) durch einen Raum darstellt, in dem sich die zwei oder mehr Zugangspunkte (102, 103, 104, 105) des Netzes befinden; und
die einen Bereich (130, 132, 134) um den Vektor (120) festlegen, in dem die Mobilstation (110) mindestens eine vorgegebene Wahrscheinlichkeit aufweist, in einem bestimmten Zeitintervall lokalisiert zu werden.

2. Verfahren nach Anspruch 1, weiter umfassend:
die Erkennung, welche der Zugangspunkte (102, 103, 104, 105) für die Mobilstation (110) aus dem Bereich (130, 132, 134) heraus verfügbar sind.

3. Verfahren nach Anspruch 2, weiter umfassend:
die Belegung von Ressourcen für die Mobilstation (110) an einem oder mehreren der verfügbaren Zugangspunkte (130, 132, 134).

4. Verfahren nach Anspruch 2 oder 3, weiter umfassend:
die Vorauthentisierung der Mobilstation (110) mit einem oder mehreren der verfügbaren Zugangspunkte (130, 132, 134).

5. Verfahren nach Anspruch 4, wobei die Vorauthentisierung der Mobilstation (110) mindestens umfasst:
die Vorauthentisierung auf der Datenübertragungsschicht des Netzes gemäß dem OSI-Kommunikationsmodell (Open Systems Interconnection) und/oder
die Vorauthentisierung auf der Datenübertragungsschicht und der Netzwerkschicht des Netzes gemäß dem OSI-Kommunikationsmodell.

6. Verfahren nach einem der Ansprüche 1 bis 5, wobei die Berechnung des Vektors (120) umfasst:
die Nutzung von Daten eines globalen Positionierungssystems für die Mobilstation (110) und/oder
die Nutzung von Daten der Signalstärke in Bezug auf die Empfangssignale an der Mobilstation (110) und Verwendung der Positionen von einem oder mehreren, die Signale erzeugenden Zugangspunkten (102, 103, 104, 105) und/oder
die Nutzung von Daten der Signalstärke in Bezug auf die Sendesignale der Mobilstation (110) und Verwendung der Positionen von einem oder mehreren, die Signale empfangenden Zugangspunkten (102, 103, 104, 105) und/oder
die Nutzung von Hand-Over-Informationen in Bezug auf die in Bewegung befindliche Mobilstation (110) und Nutzung der Positionen von einem oder mehreren Zugangspunkten (102, 103, 104, 105) und/oder
die Berechnung des Vektors (120) basierend auf einer oder einer Kombination von aktuellen, projizierten und zurückliegenden Informationen und/oder
die Berechnung des Vektors (120), mindestens zum Teil basierend auf Informationen, die für die Mobilstation (110) gelten und/oder
die Berechnung des Vektors (120), mindestens zum Teil basierend auf Informationen, die für eine bestimmte Benutzergruppe oder -klasse gelten, welcher der Benutzer der Mobilstation (110) angehört und/oder
die Berechnung des Vektors (120), mindestens zum Teil basierend auf Informationen, die für alle Mobilstationen (100) gelten.

7. Verfahren nach einem der Ansprüche 1 bis 6, wobei die Bestimmung des Bereichs (130, 132, 134) umfasst:
die Bestimmung des Bereichs (130, 132, 134), mindestens zu Teil basierend auf Informationen, die für die Mobilstation (110) gelten und/oder
die Bestimmung des Bereichs (130, 132, 134), mindestens zu Teil basierend auf Faktoren, die für eine bestimmte Benutzergruppe oder -klasse gelten, welcher der Benutzer der Mobilstation (110) angehört und/oder
die Bestimmung des Bereichs (130, 132, 134), mindestens zu Teil basierend auf Faktoren, die für alle Mobilstationen (110) gelten.

8. Verfahren nach einem der Ansprüche 1 bis 7, weiter umfassend:
die Bestimmung eines anderen Bereichs (130, 132, 134) um den Vektor (120), in dem die Mobilstation (110) mindestens eine unterschiedliche vorgegebene Wahrscheinlichkeit aufweist, in einem bestimmten Zeitintervall lokalisiert zu werden.

9. Ein drahtloses System zur Implementierung eines drahtlosen lokalen Netzwerks,umfassend:
zwei oder mehr Zugangspunkten (102, 103, 104, 105);
einer für die drahtlose Datenübertragung geeigneten Mobilstation (110); und
einem geeigneten Server (106) zur Generierung einer probabilistischen Bestimmung der Position der Mobilstation (100) durch Berechnung eines Vektors (120), welcher die Bewegung der Mobilstation (110) durch einen Raum darstellt, in dem sich die zwei oder mehr Zugangspunkte (102, 103, 104, 105) befinden, und die einen Bereich (130, 132, 134) um den Vektor (120) festlegen, in dem die Mobilstation (110) mindestens eine vorgegebene Wahrscheinlichkeit aufweist, in einem bestimmten Zeitintervall lokalisiert zu werden.

10. Ein drahtloses System zur Implementierung eines drahtlosen lokalen Netzwerks, umfassend:
zwei oder mehr Zugangspunkten (102, 103, 104, 105);
eine für die drahtlose Datenübertragung geeigneten Mobilstation (110), die zur Berechnung eines Vektors (120)geeignet ist, welcher die Bewegung der Mobilstation (110) durch einen Raum darstellt, in dem sich die zwei oder mehr Zugangspunkte (102, 103, 104, 105) befinden; und
einem geeigneten Server (106) zum Empfang des Vektors (120) von der Mobilstation (110) in einer drahtlosen Übertragung über das Netz und der einen Bereich (130, 132, 134) um den Vektor (120) bestimmt, in dem die Mobilstation (110) mindestens eine vorgegebene Wahrscheinlichkeit aufweist, in einem bestimmten Zeitintervall lokalisiert zu werden.

11. Das drahtlose System nach Anspruch 9 oder Anspruch 10, wobei der Server (106) erkennen kann, welche der Zugangspunkte (102, 103, 104, 105) für die Mobilstation (110) aus dem Bereich verfügbar sind und/oder in dem Zugangspunkte (102, 103, 104, 105), Mobilstation (110) und Server (106) mit IEEE-Norm 802.11 übereinstimmen.

12. Ein Server (106), umfassend:
einer Antenne (300);
einem mit der Antenne (300) verbundenen Funkgerät (302);
einem mit dem Funkgerät (302) gekoppelten drahtlosen LAN-Controller (304), über den der Server (106) über ein drahtloses lokales Netzwerk kommunizieren kann;
ein mit dem drahtlosen LAN-Controller (304) gekoppelten Prozessor (310); und
einem zur Speicherung von ausführbaren Codemitteln (314) angeordneten Speicher (312), die bei Ausführung durch den Prozessor (310) einen Vektor (120) berechnen, welcher die Bewegung einer für die drahtlose Datenübertragung geeigneten Mobilstation (110) durch einen Raum darstellt, in dem sich die zwei oder mehr Zugangspunkte (102, 103, 104, 105) des Netzwerks befinden und die einen Bereich (130, 132, 134) um den Vektor (120) festlegen, in dem die Mobilstation (110) mindestens eine vorgegebene Wahrscheinlichkeit aufweist, in einem bestimmten Zeitintervall lokalisiert zu werden.

13. Der Server (106) nach Anspruch 12, nach dem die ausführbaren Codemittel (314) bei Ausführung durch den Prozessor (310) erkennen, welche der Zugangspunkte (102, 103, 104, 105) für die Mobilstation (110) aus dem Bereich (130, 132, 134) heraus verfügbar sind und/oder worin der drahtlose LAN-Controller (304) mit IEEE-Norm 802.11 übereinstimmt.

14. Ein Computerprogrammprodukt für die probabilistische Bestimmung einer Position einer für die drahtlose Datenübertragung geeigneten Mobilstation (110) in einem drahtlosen lokalen Netzwerk, wobei das Computerprogrammprodukt ein maschinell lesbares Medium umfasst, welches die durch einen Prozessor eines Servers (106) und/oder einer Mobilstation (110) ausführbaren Codemittel zur Implementierung des Verfahrens nach einem der Ansprüche 1 bis 8 enthält.

15. Ein drahtloses Kommunikationsnetz, umfassend mindestens einer Mobilstation (110) und einem Server (106) nach Anspruch 12 oder Anspruch 13.

## Revendications

1. Un procédé de prédiction de la localisation d'une station mobile fonctionnant sans fil (110) dans un réseau local sans fil, le procédé comprenant :
la génération d'une prédiction probabiliste de ladite localisation par :
le calcul d'un vecteur (120) représentant le mouvement de ladite station mobile fonctionnant sans fil (110) à travers un espace dans lequel deux points d'accès (102, 103, 104, 105) ou plus dudit réseau sont situés ; et
la détermination d'une région (130, 132, 134) entourant ledit vecteur (120) dans laquelle ladite station mobile (110) a au moins une probabilité donnée d'être située dans une certaine période de temps.

2. Procédé selon la revendication 1, comprenant en outre :
l'identification, parmi lesdits points d'accès (102, 103, 104, 105) du ou des points qui est (sont) accessible(s) par ladite station mobile (110) à partir de l'intérieur de ladite région (130, 132, 134).

3. Procédé selon la revendication 2, comprenant en outre :
la mise en réserve de ressources pour ladite station mobile (110) au niveau d'un ou plusieurs desdits points d'accès (130, 132, 134) qui sont accessibles.

4. Procédé selon la revendication 2 ou 3, comprenant en outre :
l'authentification préalable de ladite station mobile (110) à l'aide d'un ou plusieurs desdits points d'accès (130, 132, 134) qui sont accessibles.

5. Procédé selon la revendication 4, dans lequel l'authentification préalable de ladite station mobile (110) comprend au moins :
l'authentification préalable de la couche liaison de données dudit réseau selon le modèle de communication d'interconnexion de systèmes ouverts, et / ou
l'authentification préalable de la couche liaison de données et de la couche réseau dudit réseau selon le modèle de communication d'interconnexion de systèmes ouverts.

6. Procédé selon l'une quelconque des revendications 1 à 5, dans lequel le calcul dudit vecteur (120) comprend :
l'utilisation de données de système de positionnement mondial pour ladite station mobile (110), et / ou
l'utilisation d'informations sur la puissance de signal concernant les signaux reçus au niveau de ladite station mobile (110) et l'utilisation des localisations d'un ou plusieurs points d'accès (102, 103, 104, 105) générant lesdits signaux et / ou
l'utilisation d'informations sur la puissance de signal concernant les signaux émis par ladite station mobile (110) et l'utilisation des localisations d'un ou plusieurs points d'accès (102, 103, 104, 105) recevant lesdits signaux et / ou
l'utilisation d'informations de relais concernant ladite station mobile (110) lorsqu'elle se déplace et l'utilisation des localisations d'un ou plusieurs points d'accès (102, 103, 104, 105) et / ou
le calcul dudit vecteur (120) en fonction d'informations quelconques parmi des informations instantanées, des informations projetées et des informations historiques, ou d'une combinaison quelconque de ces informations, et / ou
le calcul dudit vecteur (120) en fonction, au moins partiellement, d'informations qui sont spécifiques à ladite station mobile (110), et / ou
le calcul dudit vecteur (120) en fonction, au moins partiellement, d'informations qui sont spécifiques à un groupe ou une catégorie d'utilisateurs auquel ou à laquelle l'utilisateur de ladite station mobile (110) appartient, et / ou
le calcul dudit vecteur (120) en fonction, au moins partiellement, d'informations qui sont applicables à toutes les stations mobiles (100).

7. Procédé selon l'une quelconque des revendications 1 à 6, dans lequel la détermination de ladite région (130, 132, 134) comprend :
la détermination de ladite région (130, 132, 134) en fonction, au moins partiellement, d'informations qui sont spécifiques à ladite station mobile (110), et / ou
la détermination de ladite région (130, 132, 134) en fonction, au moins partiellement, de facteurs qui sont spécifiques à une catégorie ou à un groupe d'utilisateurs à laquelle ou auquel l'utilisateur de la station mobile (110) appartient, et / ou
la détermination de ladite région (130, 132, 134) en fonction, au moins partiellement, de facteurs qui sont applicables à toutes les stations mobiles (110).

8. Procédé selon l'une quelconque des revendications 1 à 7, comprenant en outre :
la détermination d'une autre région (130, 132, 134) entourant ledit vecteur (120) dans laquelle ladite station mobile (110) a au moins une probabilité donnée différente d'être située dans ladite certaine période de temps.

9. Un système sans fil pour la mise en oeuvre d'un réseau local sans fil, le système comprenant :
deux points d'accès (102, 103, 104, 105) ou plus ;
une station mobile fonctionnant sans fil (110) ; et
un serveur (106) capable de générer une prédiction probabiliste d'une localisation de ladite station mobile (100) en calculant un vecteur (120) représentant le mouvement de ladite station mobile (110) à travers un espace dans lequel lesdits deux points d'accès (102, 103, 104, 105) ou plus sont situés et en déterminant une région (130, 132, 134) entourant ledit vecteur (120) dans laquelle ladite station mobile (110) a au moins une probabilité donnée d'être située dans une certaine période de temps.

10. Système sans fil pour la mise en oeuvre d'un réseau local sans fil, le système comprenant :
deux points d'accès (102, 103, 104, 105) ou plus ;
une station mobile sans fil (110) capable de calculer un vecteur (120) représentant le mouvement de ladite station mobile (110) à travers un espace dans lequel lesdits deux points d'accès (102, 103, 104, 105) ou plus sont situés ; et
un serveur (106) capable de recevoir ledit vecteur (120) de ladite station mobile (110) dans une transmission sans fil sur ledit réseau et capable de déterminer une région (130, 132, 134) entourant ledit vecteur (120) dans laquelle ladite station mobile (110) a au moins une probabilité donnée d'être située dans une certaine période de temps.

11. Système sans fil selon la revendication 9 ou la revendication 10, dans lequel ledit serveur (10) est capable d'identifier lesquels desdits points d'accès (102, 103, 104, 105) sont accessibles par ladite station mobile (110) à partir de l'intérieur de ladite région et / ou dans lequel lesdits points d'accès (102, 103, 104, 105), ladite station mobile (110) et ledit serveur (106) sont compatibles avec la norme IEEE 802.11.

12. Un serveur (106) comprenant:
une antenne (300) ;
une radio (302) couplée à ladite antenne (300) ;
un dispositif de commande de réseau local sans fil (304) couplé à ladite radio (302), à travers lequel ledit serveur (106) est capable de communiquer sur un réseau local sans fil ;
un processeur (310) couplé audit dispositif de commande de réseau local sans fil (304) ; et
une mémoire (312) agencée pour mémoriser des moyens de codage exécutables (314) qui, lorsqu'ils sont exécutés par ledit processeur (310), calculent un vecteur (120) représentant le mouvement d'une station mobile fonctionnant sans fil (110) à travers un espace dans lequel deux points d'accès (102, 103, 104, 105) ou plus dudit réseau sont situés et déterminent une région (130, 132, 134) entourant ledit vecteur (120) dans laquelle ladite station mobile (110) a au moins une probabilité donnée d'être située dans une certaine période de temps.

13. Serveur (106) selon la revendication 12, dans lequel lesdits moyens de codage exécutables (314), lorsqu'ils sont exécutés par ledit processeur (310), identifient lesquels desdits points d'accès (102, 103, 104, 105) sont accessibles à ladite station mobile (110) à partir de l'intérieur de ladite région (130, 132, 134) et / ou dans lequel ledit dispositif de commande de réseau local sans fil (304) est compatible avec la norme IEEE 802.11.

14. Un produit logiciel informatique pour la prédiction probabiliste d'une localisation d'une station mobile fonctionnant sans fil (110) dans un réseau local sans fil, le produit logiciel informatique comprenant un support lisible par ordinateur intégrant des moyens de codage de logiciel exécutables par un processeur d'un serveur (106) et / ou une station mobile (110) pour mettre en oeuvre le procédé de l'une quelconque des revendications 1 à 8.

15. Un réseau de communication sans fil comprenant au moins une station mobile (110) et un serveur (106) selon la revendication 12 ou la revendication 13.
